# EUROPÄISCHE PATENTANMELDUNG

(11) **EP 3 639 657 A1**
(43) Veröffentlichungstag der Anmeldung: **22.04.2020**
(21) Anmeldenummer: 18201347.4
(22) Anmeldetag: 18.10.2018
(51) Int. Cl.: A01K 1/035, A01K 15/02

(54) **KATZENMÖBEL MIT FLÄCHENELEMENTEN**

(71) Anmelder: Vogel, Susanna, 5020 Salzburg (AT)
(72) Erfinder: Vogel, Susanna, 5020 Salzburg (AT)
(74) Vertreter: Rothkopf, Ferdinand

(57) **Zusammenfassung**

Ein Katzenmöbel (10) mit mindestens einem räumlichen Gebilde (16), das aus mindestens zwei Flächenelementen (24) zusammengesetzt ist, die an mindestens einem ihrer Flächenränder (26) miteinander verbunden sind, wobei das einzelne Flächenelement an mindestens einem seiner Flächenränder mit einem Befestigungsmittel (28) versehen ist, mittels dessen eine Verbindung zum Befestigungsmittel eines benachbarten Flächenelements herzustellen ist, wobei das Befestigungsmittel an dem Flächenelement über eine Perforation (36) und über mindestens eine sich entlang der Perforation erstreckende Kerbe (96) klappbar angebracht ist.

## Beschreibung

### Hintergrund der Erfindung

Die Erfindung betrifft ein Katzenmöbel mit mindestens einem räumlichen Gebilde, das aus mindestens zwei Flächenelementen zusammengesetzt ist, die an mindestens einem ihrer Flächenränder miteinander verbunden sind, wobei das einzelne Flächenelement an mindestens einem seiner Flächenränder mit einem Befestigungsmittel versehen ist, mittels dessen eine Verbindung zum Befestigungsmittel eines benachbarten Flächenelements herzustellen ist.

Ein Katzenmöbel, wie z.B. ein Katzenkratzbaum, eine Katzenhöhle oder eine Katzenkletterwand, ist ein Möbel, das auf die speziellen Bedürfnisse von Hauskatzen abgestimmt ist. Hauskatzen sind gezähmte Wildkatzen, die von ihrem Besitzer in einer Wohnung bzw. einem Haus gehalten werden und denen, speziell in urbanen Ballungsräumen der Freigang oft verwehrt bleibt. Katzen denen der Freigang gewehrt werden kann, können ihre speziellen Bedürfnisse, wie z.B. Krallenschärfen, Erkunden, Erforschen, Pirschen, Beobachten und Lauern, im Freien an dort vorhandenen Gegenständen befriedigen. Hauskatzen hingegen muss in der jeweiligen Wohnung bzw. dem jeweiligen Haus eine Gelegenheit gegeben werden, diese Bedürfnisse ausleben zu können.

In einer Wohnung bzw. einem Haus sollte daher besonders auf eine artgerechte Beschäftigung, Abwechslung und für Katzen eigene, auf deren Bedürfnisse ausgerichtete Bereiche geachtet werden, die den Bedürfnissen von Krallenschärfen, Erkunden, Erforschen, Pirschen, Beobachten und Lauern entsprechen. Durch entsprechende Katzenmöbel kann verhindert werden, dass stattdessen alternative Einrichtungsgegenstände, wie Türen oder Möbel, benutzt und diese dabei beschädigt werden.

Am Markt sind allgemein Katzenmöbel bekannt, die in der Regel aus mehreren fest zusammengefügten Bauteilen bestehen. Die Bauteile sind in der Regel eine Bodenplatte, ein oder mehrere Pfosten, ein Podest und eine Katzenhöhle. Die Katzenhöhle ist meist aus Platten zusammengesetzt, die an ihren Plattenrändern zu einem Kasten verbunden sind. Der Kasten weist zu einer Seite hin eine Öffnung auf, damit die Hauskatze in diese Katzenhöhle gelangen kann.

### Zugrundeliegende Aufgabe

Der Erfindung liegt die Aufgabe zugrunde, ein Katzenmöbel herzustellen, das besonders gut den Bedürfnissen einer Hauskatze gerecht wird.

### Erfindungsgemäße Lösung

Diese Aufgabe ist erfindungsgemäß mit einem Katzenmöbel mit mindestens einem räumlichen Gebilde gelöst, das aus mindestens zwei Flächenelementen zusammengesetzt ist, die an mindestens einem ihrer Flächenränder miteinander verbunden sind. Dabei ist das einzelne Flächenelement an mindestens einem seiner Flächenränder mit einem Befestigungsmittel versehen, mittels dessen eine Verbindung zum Befestigungsmittel eines benachbarten Flächenelements herzustellen ist. Das Befestigungsmittel ist an dem Flächenelement über bzw. mittels einer Perforation und über bzw. mittels mindestens einer sich entlang der Perforation erstreckenden Kerbe klappbar angebracht.

Das erfindungsgemäße Befestigungsmittel ist dazu vorgesehen, die mindestens zwei Flächenelemente hinsichtlich einer Formgestaltung des räumlichen Gebildes in flexibler und zugleich stabiler Weise miteinander zu verbinden. Erfindungsgemäß ist das Befestigungsmittel dazu am Flächenelement mittels einer Perforation und zusätzlich mittels einer sich entlang der Perforation erstreckenden Kerbe klappbar angebracht. Das Befestigungsmittel ist dann besonders leicht und zugleich vordefiniert um eine Art Scharnier bzw. eine Achse schwenkbar an dem Flächenelement gelagert. Das Befestigungsmittel ist derart mittels des Scharniers aus der Flächenebene des Flächenelements nach oben oder nach unten zu schwenken. Vorteilhaft ist derart dann mittels Verbinden von zwei Flächenelementen eine verschiedenartige räumliche Struktur bzw. ein räumliches Objekt herzustellen, dessen Form durch Schwenken des Befestigungsmittels relativ zum zugehörigen Flächenelement leicht veränderbar ist.

Erfindungsgemäß ist das Befestigungsmittel mit dem Flächenelement über eine Perforation verbunden. Eine Perforation ist eine Durchlochung der Flächenebene des Flächenelements mit Löchern, Schlitzen bzw. Schnitten, die sich dabei vorzugsweise in einer regelmäßigen Anordnung befinden. Die Perforation ist dann vorteilhaft linienförmig bzw. gerade entlang des Flächenrandes des Flächenelements vorgesehen, wobei insbesondere die einzelnen Löcher schlitzförmig sind. Mittels der Perforation ist das Flächenelement abschnittsweise geschwächt. Es ist dadurch eine Art Biegekante ausgebildet, an der das Befestigungsmittel am Flächenelement abzuklappen ist. Mittels vorteilhafter Wahl der Menge, der Form und der Größe der Löcher kann die Klappbarkeit des Befestigungsmittels beeinflusst werden.

Gemäß der Erfindung ist ferner das Befestigungsmittel an dem Flächenelement mittels einer Kerbe klappbar angebracht, die sich entlang der Perforation erstreckt. Die Kerbe schafft an der Stelle bzw. dem Bereich der oben genannten Materialschwächung eine weitere Reduzierung jener Querschnittsfläche, die das Flächenelement mit dem Befestigungselement verbindet. Die Kerbe schafft zugleich eine Linie entlang derer sich beim Schwenken die Klappachse bildet. Mit der Kerbe ist auch ausreichend Freiraum vorgehalten, damit das Schwenken des Befestigungsmittels für den Benutzer des erfindungsgemäßen Katzenmöbels leicht und ohne übermäßige Verformung des Materials an der Klappachse möglich ist.

Die erfindungsgemäße Perforation ist vorzugsweise mit Einzelschlitzen mit einer Schlitzlänge zwischen 1,0 mm und 1,8 mm, bevorzugt zwischen 1,3 mm und 1,5 mm ausgebildet. Eine solche Schlitzlänge ist technisch gut herstellbar und schafft zugleich eine optimale Beweglichkeit zwischen dem zugehörigen Flächenelement und dem benachbarten Befestigungsmittel.

Die Perforation ist vorzugsweise am Ende eines Flächenrandes (26) mit einem Schlitz mit einer Schlitzlänge zwischen 0,5 mm und 0,9 mm, bevorzugt zwischen 0,6 mm und 0,8 mm ausgebildet. Eine derartiger Schlitz am Ende des Flächenelements schafft dort zusätzliche Beweglichkeit beim Schwenken des Befestigungsmittels und stellt zugleich sicher, dass es nicht zu einer übermäßigen Schwächung der Anordnung in diesem Bereich kommt.

Die Perforation des erfindungsgemäßen Katzenmöbels ist ferner im Hinblick auf ein Optimum zwischen Festigkeit und Beweglichkeit vorteilhaft mit Einzelstegen mit einer Steglänge zwischen 0,2 mm und 0,8 mm, bevorzugt zwischen 0,4 mm und 0,6 mm ausgebildet.

Gemäß der Erfindung ist ferner ein Katzenmöbel vorgesehen, das vorteilhaft insbesondere auch die oben genannten Merkmale aufweisen kann, mit mindestens einem räumlichen Gebilde, das aus mindestens zwei Flächenelementen zusammengesetzt ist, die an mindestens einem ihrer Flächenränder miteinander verbunden sind, wobei das einzelne Flächenelement an mindestens einem seiner Flächenränder mit einem Befestigungsmittel versehen ist, mittels dessen eine Verbindung zum Befestigungsmittel eines benachbarten Flächenelements herzustellen ist. Das Befestigungsmittel ist dabei gemäß der Erfindung mittels eines Klebematerials gebildet.

Unter Klebematerial wird herbei ein Material verstanden, das die Fähigkeit aufweist mit der Oberfläche eines anderen Stoffes bzw. Bauteils Haftkräfte aufzubauen. Diese Haftkräfte beruhen auf dem Zusammenspiel von Adhäsion. Die Adhäsionskräfte beruhen meist auf physikalischen Wechselwirkungen, wie z. B. auf solchen zwischen polaren oder polarisierbaren Gruppen, auf Wasserstoffbrückenbindungen oder den sogenannten van der Waals-Kräften. Mittels eines derartigen Klebematerials ist es bei dem erfindungsgemäßen räumlichen Gebilde mögliche dessen Flächenelemente auf einfache und zugleich dauerhaft stabile Weise miteinander zu verbinden.

Das erfindungsgemäße Klebematerial ist vorzugsweise mit einem beidseitig klebenden Klebeband gebildet. Ein solches Klebeband kann von einem Benutzer des Katzenmöbels leicht gehandhabt werden und kann zugleich hohe Haftkräfte entwickeln.

Bei dem Katzenmöbel gemäß der Erfindung ist ferner vorzugsweise ein Stützelement für das räumliche Gebilde vorgesehen. Ein solches Stützelement kann vorzugsweise eine Platte für eine Wandbefestigung oder ein Pfosten für eine Aufstell-Anordnung sein. Dabei ist vorteilhaft das erfindungsgemäße Klebematerial dazu angepasst, an eine Stützfläche des Stützelements aufgeklebt zu werden. Mit dem Klebematerial kann auf diese Weise eine Verbindung sowohl zwischen zwei Flächenelementen als auch von einem Flächenelement zu der Stützeinrichtung hergestellt werden. Besonders bevorzugt ist wie gesagt das Stützelement eine Platte, die einfach auf den Boden aufgelegt oder an einer Wand oder dergleichen hängend befestigt werden kann. Die Platte dient dann als eine stabile flächige Unterlage, auf der mehrere der erfindungsgemäßen Flächenelemente befestigt werden können. Die Flächenelemente ergeben dann zusammen mit der Platte eine feste Raumstruktur zum Beklettern und Erkunden durch die jeweilige Katze. Die Platte kann als solche an der genannten Wand durch herkömmliche Aufhänger, wie etwa Dübel und Schrauben, befestigt werden oder auf einfachere Weise selbst angeklebt werden.

Das Stützelement ist vorzugsweise ferner dazu angepasst, an eine Befestigungsfläche außerhalb des Katzenmöbels, wie eine Gebäudewand, aufgeklebt zu werden. An das derart an einer Gebäudewand ortsfest befestigte Stützelement können die genannten Flächenele-mente dann direktortsfest angeordnet werden.

Die Erfindung ist ferner auch auf ein Verfahren zum Herstellen eines Katzenmöbels gerichtet, insbesondere eines Katzenmöbels der oben genannten Art, mit mindestens einem Flächenelement, das folgende Schritte umfasst: Bereitstellen von mindestens einem Kunststoff-Rohmaterial, Herstellen mehrerer, verschiedener Lagen Nadel-Filz aus dem mindestens einen Kunststoff-Rohmaterial und Verfilzen der Lagen Nadel-Filz zu einer Nadel-Filz-Schicht, sowie Verpressen der Nadel-Filz-Schicht unter Eintrag von Wärme.

Mit dem derartigen Verfahren können Flächenelemente hergestellt werden, die einerseits den Kratzbefürfnissen von Katzen in besonders angemessener Weise gerecht werden und die zugleich eine hohe Verschleißfestigkeit und Lebensdauer aufweisen. Solche Flächenelemente benötigen dabei insbesondere keine zusätzliche Stützkonstruktion. Solche Flächenelemente entsprechen darüber hinaus höchsten ästhetischen Ansprüchen und können aufgrund ihres geschichteten Aufbaus mit verschiedensten Eigenschaften hinsichtlich Steifigkeit, Biegbarkeit und Oberflächenbeschaffenheit versehen werden.

Der Eintrag von Wärme bei dem derartigen erfindungsgemäßen Herstellungsverfahren erfolgt vorzugsweise bei einer Temperatur von zwischen 180° C und 250° C, insbesondere zwischen 210° C und 220° C.

Erfindungsgemäß ist das einzelne Flächenelement aus Filz, nämlich Kunststofffilz, hergestellt. Filz ist eine textile Struktur aus einem ungeordneten, nur schwer zu trennenden Fasergut. Filz wird in der Regel durch trockene Vernadelung oder durch Verfestigung mit einem Wasserstrahl der unter hohem Druck auf das Fasergut auftrifft verfilzt. Ein Vorteil von Filz für die erfindungsgemäße Lösung liegt darin, dass Kunststofffilz in der Regel feuchtigkeitsabweisend ist.

Das aus Filz hergestellte, erfindungsgemäße Katzenmöbel ist daher besonders hygienisch, langlebig und pflegeleicht. Das erfindungsgemäße Flächenelement ist insbesondere aus dem Kunststoff Polyethylen (PE) oder Polyethylenterephthalat (PET) hergestellt. Der derartige Kunststofffilz hat zusätzlich die Eigenschaft, dass er biegesteifer herzustellen ist, als Filz aus natürlichen Rohstoffen. Bei einem Kunststofffilz verbindet und verdichtet sich das Fasergut des Filzes beim Formpressen nämlich besser miteinander und der Filz wird dadurch steifer. Die derart pflegeleichten Filz-Module, können am Ende ihres Produktlebens sortenrein dem jeweiligen Stoffkreislauf zurückgeführt werden.

Die mit der Erfindung erzielten Vorteile bestehen insbesondere auch darin, dass das erfindungsgemäße Produkt flach verpackt geliefert sowie jederzeit um- und ausgebaut werden kann. Jedes Produkt kann mit nur wenigen Handgriffen verbunden werden. Die Materialeigenschaften des erfindungsgemäßen Produkts ermöglichen eine langlebige und hygienische Verwendung.

Das einzelne Flächenelement des erfindungsgemäßen Katzenmöbels ist ferner vorzugsweise als ein separates Polygon gestaltet und an mindestens zwei, insbesondere an jedem seiner Polygonränder mit einem Befestigungsmittel versehen, mittels dem eine Verbindung zum Befestigungsmittel eines benachbarten Flächenelements herzustellen ist.

Das derartige erfindungsgemäß vorteilhafte Flächenelement ist ein flaches, plattenförmiges Element, das als ein Polygon bzw. Vieleck gestaltet ist. Ein Polygon weist mehr als zwei Polygonränder und mehr als zwei Polygoneckpunkte auf. Die Polygonränder begrenzen das Flächenelement und sind im Wesentlichen gerade, insbesondere vollständig gerade. Die Polygonränder des erfindungsgemäßen Flächenelements schneiden bzw. berühren sich also in den Polygoneckpunkten. Derartige Polygone werden in der Mathematik auch als einfaches Polygon bezeichnet.

Erfindungsgemäß bevorzugt ist das einzelne Flächenelement in Polygonform an mindestens zwei, insbesondere an jedem seiner Polygonränder mit einem Befestigungsmittel versehen. Mit dem Befestigungsmittel sind ein erstes Polygon und ein benachbartes zweites Polygon an ihren jeweiligen Polygonrändern miteinander ortsfest zu verbinden. Die beiden Polygone bilden dann zusammen ein neues, gemeinsames Flächenelement aus. Auf diese Weise wird erfindungsgemäß insbesondere von den derart miteinander verbundenen Polygonen ein neues räumliches Gebilde ausgebildet. Die Polygonränder benachbarter Flächenelemente sind dazu insbesondere gleich lang. Der Vorteil derartiger Flächenelemente liegt darin, dass mittels der Flächenelemente ein individuelles, an jeweilige Begebenheiten anpassbares Katzenmöbel zu gestalten ist. Dieses Katzenmöbel ist also modular aus einzelnen, separaten Flächenelementen mittels des Befestigungsmittels zusammenzufügen.

Die erfindungsgemäß vorteilhafte Gestaltung beruht dabei auf der Erkenntnis, dass herkömmliche Katzenmöbel nicht wirklich den Bedürfnissen von Hauskatzen gerecht werden. Vor allem aufgrund der fest zusammengefügten Struktur herkömmlicher Katzenmöbel wird das Bedürfnis der Hauskatze nach Erkunden, Erforschen, Pirschen, Beobachten und Lauern nicht ausreichend befriedigt. Der Hauskatze wird langweilig und sie wendet sich vom Katzenmöbel ab. Außerdem lassen sich herkömmliche Katzenmöbel aufgrund ihres unflexiblen Aufbaus nicht optimal an Gegebenheiten im Wohnraum anpassen. Die erfindungsgemäße Gestaltung dient als Ergänzung und Erweiterung des Lebensraums der Katze, indem ihr Zugang zu zuvor unerschlossenem Territorium gewährt, oder ein gänzlich neues Territorium erschaffen werden kann. Die Erfindung dient als Basis für die artgerechte Aufrüstung jeder individuellen Wohnsituation auf die Bedürfnisse von Katzen. Die Erfindung ermöglicht den Katzen ein tatsächliches "Beklettern" der Wände und schafft ihnen so neue Bewegungsbereiche in der Wohnung.

Gemäß einer vorteilhaften Weiterbildung der erfindungsgemäßen Lösung ist das Befestigungsmittel mit einer sich entlang des Polygonrandes des Flächenelementes erstreckenden, streifenförmigen Randfläche gestaltet. Die derartige Randfläche erstreckt sich an dem Polygonrand und weist dabei in der Regel eine gleichbleibende Breite auf. Ein Seitenrand der Randfläche wird dann von dem Polygonrand begrenzt, der zweite Seitenrand der Randfläche verläuft nach außen gerichtet, parallel zu dem Polygonrand. Erfindungsgemäß vorteilhaft ist die Randfläche dabei derart gestaltet, dass sie bei Verbindung mit einem benachbarten Flächenelement mit dessen Randfläche eine Berührfläche ausbildet. Mittels dieser Berührfläche der beiden Randflächen ist dann bereits aufgrund Reibung eine Verbindung hergestellt. Insbesondere sind die beiden Randflächen aber vorteilhaft mittels mindestens eines Verbindungselements miteinander verbunden. Dazu sind vorteilhaft an den beiden Randflächen zwei Befestigungspunkte ausgebildet. An diesen Befestigungspunkten sind dann mittels eines jeweiligen Verbindungs-elements ortsfeste, aber dennoch lösbare Verbindungen herzustellen. Vorzugsweise sind die Befestigungspunkte je als ein Loch in der Randfläche des Flächenelementes ausgebildet. Passend zu dem jeweiligen Loch ist das Verbindungselement vorteilhaft als Schraubverbindung, Steckverbindung oder als Clipverbindung ausgeführt. Alternativ oder zusätzlich sind die Randflächen an ihren Berührflächen wie oben erläutert mittels eines Klebematerials, vorzugsweise einem beidseitig klebenden Klebeband, miteinander verbunden, insbesondere flächig verklebt.

Erfindungsgemäß bevorzugt ist ferner mindestens ein Flächenelement als ein konvexes Polygon gestaltet. Bei einem konvexen Polygon sind alle Innenwinkel kleiner als 180 Grad. Das Flächenelement ist dann vorteilhaft als ein Dreieck, Viereck oder Fünfeck hergestellt. Mit einem derartigen konvexen Polygon kann der Benutzer besonders einfach aus mehreren Flächenelementen ein variables und individuell zu gestaltendes Katzenmöbel zusammenfügen.

Vorteilhaft ist ferner mindestens ein Flächenelement als ein gleichwinkliges Polygon, insbesondere in einer Ebene, gestaltet. Ein gleichwinkliges Polygon ist ein Polygon, bei dem alle Innenwinkel des Polygons gleich groß sind. Mittels eines gleichwinkligen Polygons lassen sich besonders vorteilhaft Katzenmöbel zusammenbauen, die aufgrund der gleichen Winkel eine regelmäßige Struktur aufweisen. Besonders vorteilhaft ist dabei das einzelne Flächenelement als ein gleichwinkliges Dreieck ausgebildet.

Ferner ist vorteilhaft das Flächenelement als regelmäßiges Polygon, insbesondere in einer Ebene, gestaltet. Ein regelmäßiges Polygon bzw. regelmäßiges Vieleck oder Isogon ist ein Polygon, bei dem sowohl die Seiten gleich lang sowie auch alle Innenwinkel gleich groß sind. Diese Art von Polygon bietet eine besonders einfache Möglichkeit ein erfindungsgemäßes Katzenmöbel zu gestalten. Das Katzenmöbel ist dabei variabel zu gestalten und weist zugleich eine regelmäßige Struktur auf. Da vorzugsweise viele Flächenelemente gleiche Seitenlängen aufweisen, können die Flächenelemente beliebig kombiniert werden. Besonders bevorzugt ist dabei das einzelne Flächenelement als ein regelmäßiges, gleichseitiges Dreieck ausgebildet.

Das erfindungsgemäße Katzenmöbel ist ferner vorteilhaft mit mindestens einem ersten Flächenelement gestaltet, das als ein gleichseitiges Dreieck mit drei ersten Seitenlängen gestaltet ist, und mit mindestens einem zweiten Flächenelement gestaltet, das als ein erstes gleichschenkliges Dreieck mit zwei ersten Schenkellängen und einer ersten Basislänge gestaltet ist, wobei dessen erste Schenkellängen je der ersten Seitenlänge entsprechen. Flächenelemente dieser Gestaltung ermöglichen es, dass das erste Flächenelement und das zweite Flächenelement mit der ersten Seitenlänge und der ersten Schenkellänge zu verbinden sind. Die Flexibilität und Vielfalt beim Herstellen des erfindungsgemäßen Katzenmöbels ist so gesteigert.

Bevorzugt ist das erfindungsgemäße Katzenmöbel ferner mit mindestens einem dritten Flächenelement gestaltet, das als ein zweites gleichschenkliges Dreieck mit zwei zweiten Schenkellängen und einer zweiten Basislänge gestaltet ist. Das dritte Flächenelement ist so ausgebildet, dass dessen zweite Schenkellängen je der ersten Basislänge entsprechen. Dieses dritte Flächenelement führt dazu, dass zusammen mit dem ersten und dem zweiten Flächenelement ein Baukastensystem entsteht. Dabei ist mit nur drei unterschiedlichen Flächenelementen eine hochflexible und variantenreiche Gesamtstruktur zu bauen.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: ein Ablaufdiagramm eines Verfahrens zum Herstellen eines Katzenmöbels gemäß der Erfindung,
- Fig. 2: eine Seitenansicht eines ersten Ausführungsbeispiels eines erfindungsgemäßen Katzenmöbels mit Flächenelementen,
- Fig. 3: eine Vorderansicht des ersten Ausführungsbeispiels gemäß Fig. 2,
- Fig. 4: eine Draufsicht eines zweiten Ausführungsbeispiels eines erfindungsgemäßen Katzenmöbels,
- Fig. 5: eine perspektivische Ansicht einer ersten Ausführungsform eines erfindungsgemäßen Flächenelements,
- Fig. 6: eine perspektivische Ansicht einer zweiten Ausführungsform eines erfindungsgemäßen Flächenelements,
- Fig. 7: eine perspektivische Ansicht einer dritten Ausführungsform eines erfindungsgemäßen Flächenelements,
- Fig. 8: eine perspektivische Ansicht einer vierten Ausführungsform eines erfindungsgemäßen Flächenelements,
- Fig. 9: eine perspektivische Ansicht einer fünften Ausführungsform eines erfindungsgemäßen Flächenelements,
- Fig. 10: eine perspektivische Ansicht einer sechsten Ausführungsform eines erfindungsgemäßen Flächenelements,
- Fig. 11: eine Seitenansicht zweier Flächenränder mit deren Befestigungsmitteln und einem zugehörigen Verbindungselements,
- Fig. 12: eine perspektivische Ansicht des Flächenelements gemäß Fig. 10 mit Verbindungselementen und einer zweiten Art Befestigungsmittel,
- Fig. 13: eine Seitenansicht zweier Flächenränder mit dem Befestigungsmittel gemäß Fig. 12,
- Fig. 14: eine Draufsicht auf zwei Flächenelemente mit deren Befestigungsmitteln,
- Fig. 15: eine perspektivische Ansicht eines Werkzeugs zum Herstellen einer Perforation mit Kerbe an einem Flächenelement,

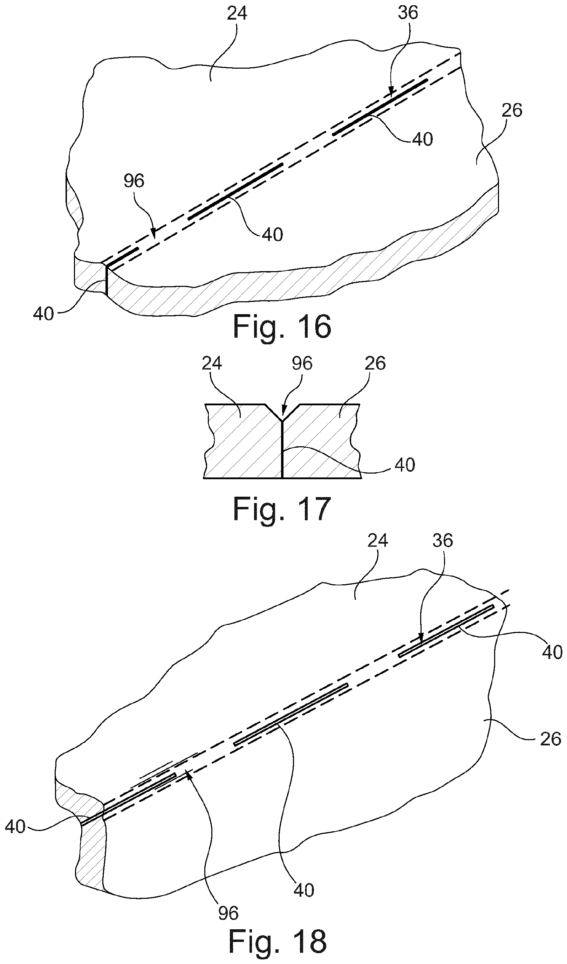

- Fig. 16: eine perspektivische Ansicht einer Perforation mit Kerbe an einem Flächenelement im nicht geklappten Zustand,
- Fig. 17: eine vergrößerte Seitenansicht der Perforation mit Kerbe gemäß Fig. 16 und
- Fig. 18: die Ansicht gemäß Fig. 16 im geklappten Zustand.

### Detaillierte Beschreibung der Ausführungsbeispiele

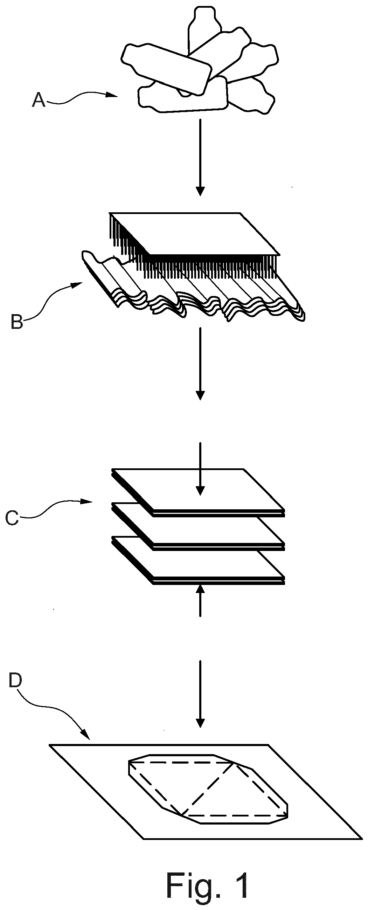

In Fig. 1 ist ein Teil eines Verfahrens zum Herstellen eines Katzenmöbels 10 veranschaulicht. Von dem Verfahren sind vier Schritte A, B, C und D veranschaulicht. In dem Schritt A wird Kunststoff-Rohmaterial verschiedener Qualitäten bereitgestellt. Das Kunststoff-Rohmaterial stammt bevorzugt vom Recyceln von Kunststoff-Flaschen. Die dabei gewonnenen Kunststoff-Chips sind vorzugsweise aus Polyethylen (PE) und/oder aus Polyethylenterephthalat (PET). Aus diesen Kunststoff-Chips werden mittels einer Extruder-Maschine Kunststoff-Fäden und aus diesen mittels einer Crimp-Maschine Faden-Knäuel hergestellt. Die Faden-Knäuel werden in einer Filz-Maschine zu einzelnen Lagen Nadel-Filz verarbeitet. Dann werden mehrere Lagen Nadel-Filz übereinander geschichtet und miteinander verfilzt. Dies geschieht im Schritt B indem mittels Filz-Nadeln die einzelnen Lagen Nadel-Filz verdichtet werden. Es entsteht ein Nadel-Filz-Schicht mit einer Dicke von zwischen 1 cm und 4 cm, vorzugsweise zwischen 2 cm und 3 cm Dicke, besonders bevorzugt von 2,5 cm Dicke.

In einem Schritt C wird die Nadel-Filz-Schicht mittels einer Pressen-Maschine unter Eintrag von Wärme verpresst. Dazu wird die Nadel-Filz-Schicht zunächst auf eine Temperatur zwischen 180° C und 250° C, insbesondere zwischen 210° C und 220° C, besonders bevorzugt auf eine Temperatur von 215° C vorgeheizt. Dann wird die derart erwärmte Nadel-Filz-Schicht zwischen zwei kalte Platten eines Pressen Werkzeugs gelegt und auf eine Dicke zwischen 2 mm und 7 mm, bevorzugt zwischen 4 mm und 5 mm, besonders bevorzugt von 4,5 mm Dicke verpresst. Die Temperatur der Platten beträgt zwischen 10° C und 30° C, bevorzugt zwischen 15° C und 25° C, besonders bevorzugt 20° C. Mit dem derartigen Temperatureintrag sowie dem derartigen Verpressen der Nadel-Filz-Schicht mittels kalter Platten verkleben die Filz-Fasern der Nadel-Filz-Schicht und verbacken. Es entsteht eine einzige, besonders stabile Kunststofffilz-Schicht.

Aus dieser vergleichsweise biegesteifen Kunststofffilz-Schicht wird nachfolgend in einem Schritt D mittels einer Stanz-Maschine ein Flächenelement 24 ausgestanzt, welches nachfolgend genauer erläutert werden wird.

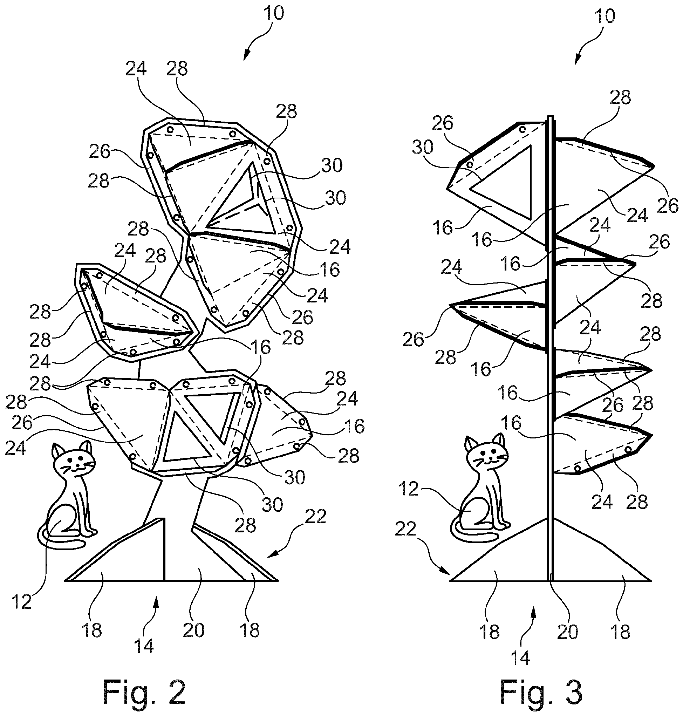

Fig. 2 und 3 zeigen das Katzenmöbel 10 für eine Katze 12 mit einem Grundelement 14 und mehreren räumlichen Gebilden 16, die zusammen eine Art Katzenbaum bilden. Das Grundelement 14 bildet eine Art Stützelement und umfasst zwei plattenförmige Fußelemente 18 und ein plattenförmiges Stammelement 20. Die Fußelemente 18 sind im rechten Winkel zu dem Stammelement 20 abstützend angeordnet und bilden zum Boden hin eine Art Stammwurzel 22 aus. Diese Stammwurzel 22 ist so gestaltet, dass ein Umkippen des Grundelements 14 verhindert ist.

Das räumliche Gebilde 16 ist aus mehreren Flächenelementen 24 modular zusammengesetzt. Die Flächenelemente 24 sind wie oben erläutert hergestellt und je als ein im Wesentlichen ebenes Polygon gestaltet. Sie weisen an ihren jeweiligen Flächenrändern 26 je ein Befestigungsmittel 28 auf.

Das Befestigungsmittel 28 eines der Flächenelemente 24 ist insbesondere mit dem Befestigungsmittel 28 eines benachbarten Flächenelements 24 verbunden. Die Flächenelemente 24, die an das Stammelement 20 angrenzen, sind mit ihrem jeweils zum Stammelement 20 weisenden Befestigungsmittel 28 mit dem Stammelement 20 ortsfest verbunden. Einige der Flächenelemente 24 weisen Durchgangsöffnungen 30 auf.

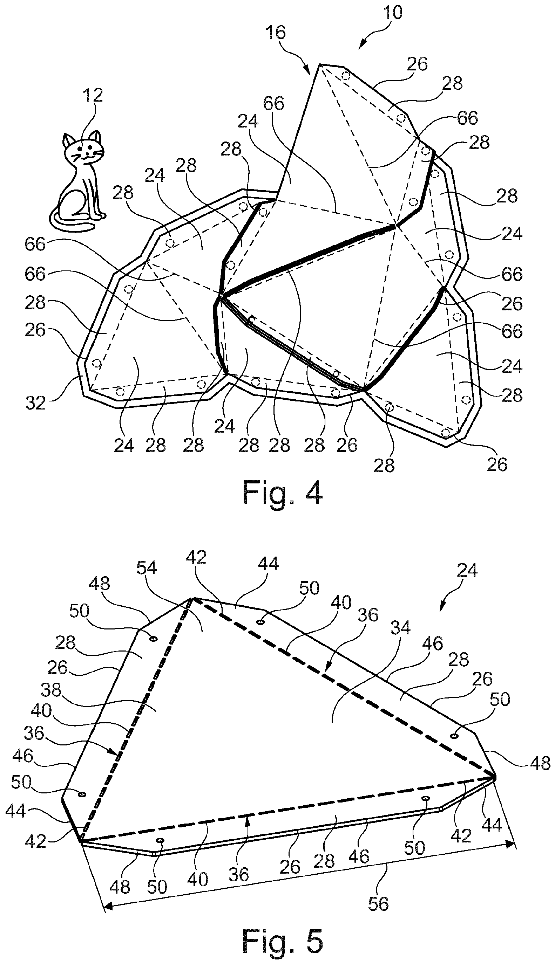

In Fig. 4 ist ein Katzenmöbel 10 gezeigt, bei dem als besonders vorteilhaftes Stützelement eine einzige, einfache und dabei vergleichsweise großflächige Wandplatte oder Bodenplatte 32 ausgebildet ist. Mit der Bodenplatte 32, die eben auch an einer Gebäudewand oder dergleichen zu befestigen sein kann, ist das zugehörige, räumliche Gebilde 16 ortsfest verbunden. Wie auch in Fig. 2 und 3 ist das räumliche Gebilde 16 gemäß Fig. 4 aus mehreren modularen Flächenelementen 24 zusammengesetzt. Diese Flächenelemente 24 sind auch hier mittels Befestigungsmitteln 28 miteinander verbunden. Die an die Bodenplatte 32 anschließenden Flächenelemente 24 sind mittels der zu der Bodenplatte 32 weisenden Befestigungsmittel 28 mit der Bodenplatte 32 verbunden. Auch dieses Katzenmöbel 10 weist eine hier allerdings nicht dargestellte Durchgangsöffnung auf.

Gemäß Fig. 2 bis 4 erlauben es die Flächenelemente 24 mittels der Befestigungsmittel 28 verschiedene, unterschiedliche und variable räumliche Gebilde 16 zu schaffen. Die räumlichen Gebilde 16 können an unterschiedlich gestalteten Grundelementen 14 befestigt sein. Es können aber auch mit ein und demselben Grundelement 14 mehrere unterschiedliche räumliche Gebilde 16 verbunden werden. Das Grundelement 14 und das jeweilige räumliche Gebilde 16 ergeben zusammen das Katzenmöbel 10. Es ist auch ein hier allerdings nicht dargestelltes Katzenmöbel möglich das ausschließlich aus mehreren Flächenelementen 24 zusammengesetzt ist.

Es ist ferner möglich das Katzenmöbel 10 wieder in seine Flächenelemente 24 und das Grundelement 14 zu zerlegen sowie auf Basis des Grundelements 14 mittels der Flächenelemente 24 ein neues, anders gestaltetes räumliches Gebilde 16 zu schaffen. Dieses neue räumliche Gebilde 16 ergibt dann zusammen mit dem Grundelement 14 ein andersartiges Katzenmöbel 10. Ein für die Katze 12 eigentlich bereits bekanntes Katzenmöbel 10 wird so zum für die Katze 12 neuen Katzenmöbel 10 umgewandelt.

Auf das Katzenmöbel 10 gemäß Fig. 2 bis 4 kann die Katze 12 hinaufklettern. Die Katze 12 hat zudem die Möglichkeit durch die Durchgangsöffnungen 30 in das räumliche Gebilde 16 hinein zu gelangen und das Innere des räumlichen Gebildes 16 z.B. als Ruheplatz zu nutzen. Das Katzenmöbel 10 kann zudem insbesondere mit seinem Stammelement 20 und auch seinen räumlichen Gebilden 16 von der Katze 12 als ein Kratzobjekt zum Schärfen der Krallen genutzt werden.

Die Fig. 5 bis 10 zeigen Flächenelemente 24 in unterschiedlichen Ausführungsformen. Die Flächenelemente 24 umfassen dabei eine weitgehend ebene Grundplatte 34, die aus einem vergleichsweise steifen Kunststofffilz hergestellt ist. Die Grundplatte 34 ist mittels einer Perforation 36 in eine Grundform 38 und die jeweiligen Befestigungsmittel 28 unterteilt. Die Grundform 38 ist dabei jeweils als ein ebenes, konvexes Polygon gestaltet, an dessen Polygonrändern sich die Perforationen 36 erstrecken.

Die Perforation 36 ist mittels Schlitzen bzw. in Draufsicht rechteckigen Langlöchern 40 gestaltet, die linear ausgerichtet und voneinander beabstandet angeordnet sind. Die Langlöcher bzw. Schlitze 40 sind alternativ vorteilhaft als einfache, linienförmige Längsschlitze ausgebildet, wie weiter unten noch erläutert wird. Die Schlitze 40 durchsetzen die Grundplatte 34 vollständig. Die Perforation 36 schwächt die Grundplatte 34 derart, dass im zugehörigen Bereich ein Art Scharnier ausbildet ist. An der Perforation 36 kann dadurch das jeweilige Befestigungsmittel 28 aus der Ebene der Grundplatte 34 weg nach oben oder nach unten geschwenkt werden.

Bei einer hier nicht dargestellten Ausführungsform ist die Perforation 36 mittels in Draufsicht runder oder ovaler Löcher ausgeführt. Die Perforation 36 kann ferner vorteilhaft die Grundplatte 34 nicht vollständig durchdringen, sondern als eine Schwächung der Dicke der Grundplatte 34 ausgeführt sein.

Das jeweilige an die polygonförmige Grundform 38 angeschlossene Befestigungsmittel 28 weist eine Trapezform mit einer ersten Seite 42, einer zweiten Seite 44, einer dritten Seite 46 und einer vierten Seite 48 auf. Die erste Seite 42 des Trapezes weist zu der Grundform 38 hin, sie ist mittels der Perforation 36 an die Grundform 38 angeschlossen. Die dritte Seite 46 des Trapezes erstreckt sich parallel zu der ersten Seite 42. Die zweite Seite 44 und die vierte Seite 48 bilden an den jeweiligen Enden des Trapezes eine Abschrägung zu der dritten Seite 46 hin aus. Die Eckenwinkel dieser Abschrägung sind gleich groß gestaltet, wie die benachbarten Eckenwinkel der polygonförmigen Grundform 38.

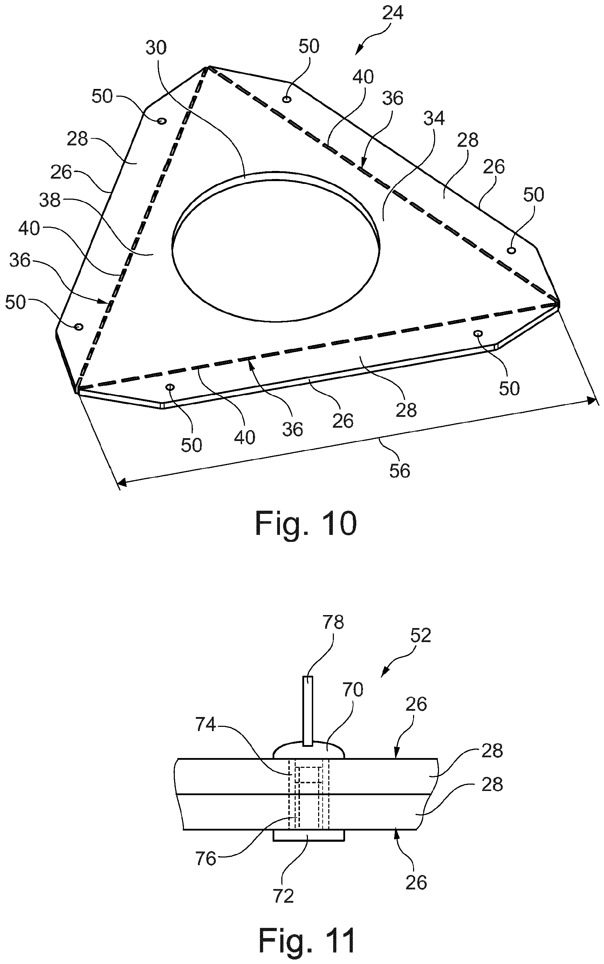

Das Befestigungsmittel 28 weist an den jeweiligen Endbereichen des Trapezes zwei Befestigungspunkte 50 auf. Die Befestigungspunkte 50 sind als Löcher in der Grundplatte 34 ausgeführt. Durch diese Befestigungspunkte 50 hindurch ist jeweils ein Verbindungselement 52 gemäß Fig. 10 zu führen. Mittels des Verbindungselementes 52 sind so nebeneinanderliegende Flächenelemente 24 miteinander zu verbinden.

Fig. 5 zeigt ein Flächenelement 24 dessen polygonförmige Grundform 38 als ein gleichseitiges Dreieck 54 mit jeweils einer ersten Seitenlänge 56 ausgeführt ist.

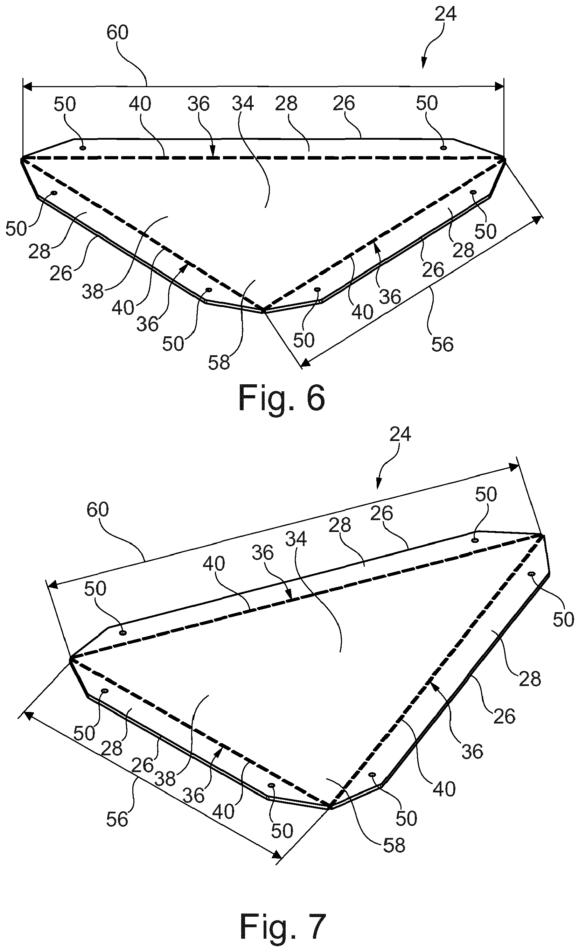

Die Fig. 6 zeigt ein Flächenelement 24 mit einem gleichschenkligen Dreieck 58 als polygonförmige Grundform 38. Das gleichschenklige Dreieck 58 umfasst eine Basis mit einer ersten Basislänge 60 und zwei gleich lange Schenkel. Die beiden Schenkel des gleichschenkligen Dreiecks 58 sind gleich lang wie die erste Seitenlänge 56 gemäß Fig. 4.

Gemäß Fig. 7 ist das dortige Flächenelement 24 als ein gleichschenkliges Dreieck 58 gestaltet, dessen Grundform 38 als Basis die erste Seitenlänge 56 und die beiden Schenkel die Länge der ersten Basislänge 60 aufweisen.

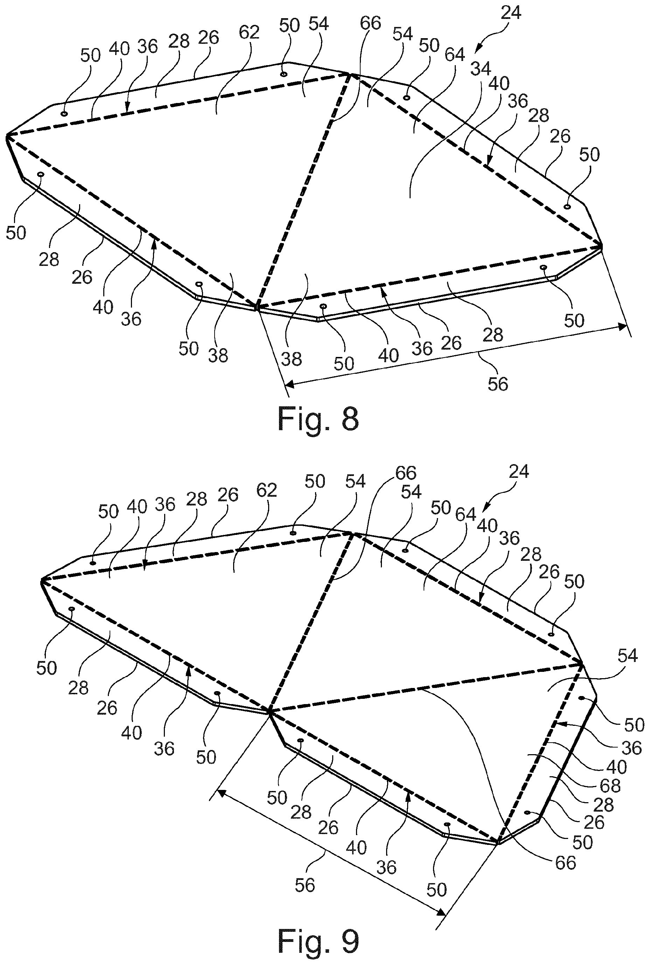

Fig. 8 zeigt ein Flächenelement 24, bei dem sich die Grundplatte 34 aus zwei Grundformen 38 und vier an die beiden Grundformen 38 angeschlossene Befestigungsmittel 28 zusammensetzt. Die Grundformen 38 sind wie in Fig. 5 zwei gleichseitige Dreiecke 54 mit je einer ersten Seitenlänge 56. Eine erste Grundform 62 dieser beiden Grundformen 38 ist mit der dann zweiten Grundform 64 an einem Verbindungsrand 66 verbunden, die mittels einer Perforation 36 gestaltet ist. Diese Perforation 36 wirkt, wie bereits erläutert, als eine Art Scharnier mittels der die Grundplatte 34 etwa mittig zu knicken ist. Mittels des Abknickens ist so ein räumliches Flächengebilde herzustellen.

Die Befestigungsmittel 28 sind an die beiden Grundformen 38 ebenfalls mittels je einer Perforation 36 angekoppelt. Mit den Befestigungsmitteln 28 kann dann dieses Flächenelement 24 mit anderen Flächenelementen 24 zu einem größeren räumliche Gebilde 16 verbunden werden. Außerdem ist das Flächenelement 24 mit den Befestigungsmitteln 28 an ein Stammelement 20 oder eine Bodenplatte 32 zu verbinden.

Hier nicht dargestellt kann die Grundplatte 34 gemäß Fig. 7 auch aus zwei gleichschenkligen Dreiecken 58 gemäß Fig. 5 und Fig. 6 und mit umgebenden Befestigungsmitteln 28 zusammengesetzt sein. Der Verbindungsrand 66 weist dabei entweder die erste Seitenlänge 56 oder die erste Basislänge 60 auf.

Das Flächenelement 24 gemäß Fig. 8 ermöglicht es ein räumliches Gebilde schneller zusammen zu bauen, da das Herstellen einer Verbindung von zwei Flächenelementen 24 gemäß Fig. 5 bis 7 entfällt.

Fig. 9 zeigt ein Flächenelement 24, bei dem die Grundplatte 34 sich aus drei Grundformen 38, nämlich drei gleichseitigen Dreiecken 54, und fünf an die Grundformen 38 angeschlossenen Befestigungsmitteln 28 zusammensetzt. Wie in Fig. 8 sind eine erste Grundform 62 mit einer zweiten Grundform 64 mittels eines Verbindungsrands 66 verbunden. An die zweite Grundform 64 ist an einem weiteren ihrer Polygonränder eine dritte Grundform 68 angeschlossen. Auch hier sind die Befestigungsmittel 28 die zusammengefügten Grundformen 62, 64 und 68 umgebend angeordnet.

Das Flächenelement 24 gemäß Fig. 9 ermöglicht es noch schneller als mit einem Flächenelement 24 gemäß Fig. 8 ein räumliches Gebilde zu bauen, da das Herstellen von zwei Verbindungen von drei Flächenelementen 24 gemäß Fig. 5 bis 7 entfällt. Bei einem hier nicht dargestellten Ausführungsbeispiel ist daher ferner ein Flächenelement 24 aus mehr als drei Grundformen 38 zusammengesetzt. Dieses Flächenelement 24 ist dann als eine Art Abwicklung des jeweiligen räumlichen Gebildes ausgebildet.

Fig. 10 zeigt ein Flächenelement 24 gemäß Fig. 5, bei dem mittig in der Grundplatte 34 eine kreisrunde Durchgangsöffnung 30 angeordnet ist. Diese Durchgangsöffnung 30 ist in ihrer Größe so bemessen, dass sie nicht bis zu einem der Polygonränder der Grundform 38 reicht. Wie auch in Fig. 2 gezeigt ist, kann die Durchgangsöffnung 30 alternativ die Form eines Dreiecks aufweisen. Das Dreieck kann dabei vorteilhaft gerundete Ecken aufweisen.

Fig. 11 zeigt eine Ausführungsform eines Verbindungselements 52 an zwei zusammengefügten Befestigungsmitteln 28 zweier Flächenränder 26. Das Verbindungselement 52 umfasst ein Schraubelement 70 und eine Schraube 72. Das Schraubelement 70 ist mit einer Schraubhülse 74 mit einem Innengewinde 76 gebildet. An einem Kopf der Schraubhülse 74 kann ein Schraubendreher 78 angesetzt werden und die Schraubhülse 74 so gedreht werden.

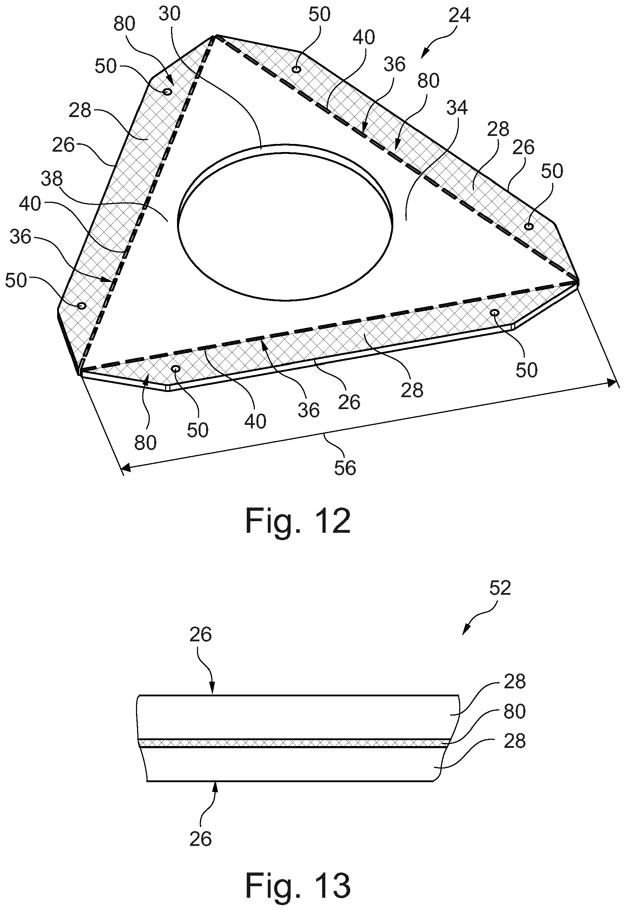

In Fig. 12 ist eine Ausgestaltung des Flächenelements 24 gemäß Fig. 10 dargestellt, bei der am Befestigungsmittel 28 nicht nur Befestigungspunkte 50 vorgesehen sind, sondern ferner auch auf den Flächenrändern 26 ein Klebematerial 80 aufgebracht ist. Das Klebematerial 80 ist in der Form eines doppelseitigen Klebebandes auf den jeweiligen Flächenrand 26 aufgeklebt und bedeckt diesen vollflächig. Das Klebematerial 80 ist derart gewählt, dass dieses an einen Flächenrand 26 eines anderen Flächenelements 24, an eine Stützfläche bzw. Stützplatte eines Stützelements, wie etwa das Stammelement 20, oder auch direkt an eine Wandfläche entweder unlösbar oder lösbar aufgeklebt werden kann. Die Fig. 13 zeigt dann wie mittels eines derartigen Klebematerials 80 zwei Flächenränder 26 als Befestigungsmittel 28 miteinander verklebt sind.

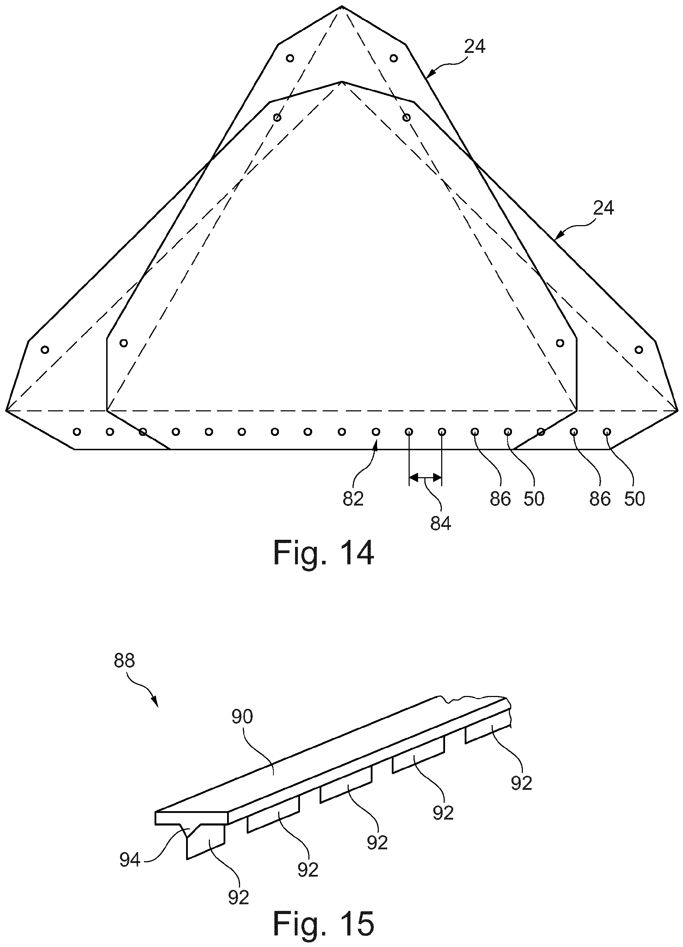

Die Fig. 14 veranschaulicht ein sogenanntes Punktraster 82, welches für die Befestigungspunkte 50 an verschiedenartigen Flächenelementen 24 ausgebildet ist. Das Punktraster 82 definiert einen bestimmten Abstand 84 zwischen Punkten 86, an denen dann wahlweise die Befestigungspunkte 50 angeordnet sein können. Mittels dieses definierten Punktrasters 82 ist es somit möglich Flächenele-mente 24 unterschiedlicher Form insbesondere an einem zugehörigen Stützelement zu befestigten.

Mit der Fig. 15 ist ein Werkzeug 88 dargestellt, das dazu vorgesehen ist, während oder nach dem oben erläuterten Schritt D die zum jeweiligen Flächenelement 24 gehörenden Perforationen 36 auszubilden. Das Werkzeug 88 ist dabei mit einem balkenförmigen Grundkörper 90 ausgebildet. Von dem Grundkörper 90 stehen bezogen auf die Fig. 15 nach unten hin Schlitzmesser 92 ab. Die Schlitzmesser 92 sind entlang der Längserstreckung des Grundkörpers 90 hintereinander liegend und vertikal vom Grundkörper 92 abstehend ausgebildet. Mittels der Schlitzmesser 92 werden beim Perforieren des Flächenelements 24 die oben genannten Schlitze 40 als einfache, linienförmige Längsschlitze ausgebildet.

Am Übergang des Grundkörpers 90 in die jeweiligen Schlitzmesser 92 befindet sich an dem Grundkörper 90 ferner ein im Querschnitt betrachtet V-förmiger, länglicher Kerbenstempel 94. Mittels dieses Kerbenstempels 94 wird beim Stanzen der jeweiligen Perforation 36 zusätzlich eine dann ebenfalls im Querschnitt V-förmige, durchgehende Kerbe 96 ausgebildet. Diese Kerbe 96 erstreckt sich damit unmittelbar entlang der Perforation 36 und erleichtert dann ein Knicken des Flächenrandes 26 als Befestigungsmittel 28 am restlichen Flächenelement 24.

Abschließend sei angemerkt, dass sämtlichen Merkmalen, die in den Anmeldungsunterlagen und insbesondere in den abhängigen Ansprüchen genannt sind, trotz des vorgenommenen, formalen Rückbezugs auf einen oder mehrere bestimmte Ansprüche, auch einzeln oder in beliebiger Kombination eigenständiger Schutz zukommen soll.

### Bezugszeichenliste

- A: Bereitstellen von Kunststoff-Rohmaterial
- B: Filzen einer Nadel-Filz-Schicht
- C: Verpressen der Nadel-Filz-Schicht unter Eintrag von Wärme
- D: Stanzen eines Flächenelements
- 10: Katzenmöbel
- 12: Katze
- 14: Grundelement
- 16: räumliches Gebilde
- 18: Fußelemente
- 20: Stammelement
- 22: Stammwurzel
- 24: Flächenelemente
- 26: Flächenrand
- 28: Befestigungsmittel
- 30: Durchgangsöffnungen
- 32: Boden- oder Wandplatte
- 34: Grundplatte
- 36: Perforation
- 38: Grundform
- 40: Schlitz
- 42: erste Seite
- 44: zweite Seite
- 46: dritte Seite
- 48: vierte Seite
- 50: Befestigungspunkte
- 52: Verbindungselement
- 54: gleichseitiges Dreieck
- 56: erste Seitenlänge
- 58: gleichschenkliges Dreieck
- 60: erste Basislänge
- 62: erste Grundform
- 64: zweite Grundform
- 66: Verbindungsrand
- 68: dritte Grundform
- 70: Schraubelement
- 72: Schraube
- 74: Schraubhülse
- 76: Innengewinde
- 78: Schraubendreher
- 80: Klebematerial
- 82: Punktraster
- 84: Abstand
- 86: Punkt
- 88: Werkzeug
- 90: Grundkörper
- 92: Schlitzmesser
- 94: Kerbenstempel
- 96: Kerbe

## Patentansprüche

1. Katzenmöbel (10) mit mindestens einem räumlichen Gebilde (16), das aus mindestens zwei Flächenelementen (24) zusammengesetzt ist, die an mindestens einem ihrer Flächenränder (26) miteinander verbunden sind, wobei das einzelne Flächenelement (24) an mindestens einem seiner Flächenränder mit einem Befestigungsmittel (28) versehen ist, mittels dem eine Verbindung zum Befestigungsmittel (28) eines benachbarten Flächenelements (24) herzustellen ist, **dadurch gekennzeichnet, dass** das Befestigungsmittel (28) an dem Flächenelement (24) über eine Perforation (36) und über mindestens eine sich entlang der Perforation (36) erstreckende Kerbe (96) klappbar angebracht ist.

2. Katzenmöbel nach Anspruch 1,
**dadurch gekennzeichnet, dass** die Perforation (36) mit einzelnen Schlitzen (40) mit einer Schlitzlänge zwischen 1,0 mm und 1,8 mm, bevorzugt zwischen 1,3 mm und 1,5 mm ausgebildet ist.

3. Katzenmöbel nach Anspruch 1 oder 2,
**dadurch gekennzeichnet, dass** die Perforation (36) am Ende eines Flächenrandes (26) mit einem Schlitz (40) mit einer Schlitzlänge zwischen 0,5 mm und 0,9 mm, bevorzugt zwischen 0,6 mm und 0,8 mm ausgebildet ist.

4. Katzenmöbel nach einem der Ansprüche 1 bis 3,
**dadurch gekennzeichnet, dass** die Perforation (36) mit einzelnen Stegen mit einer Steglänge zwischen 0,2 mm und 0,8 mm, bevorzugt zwischen 0,4 mm und 0,6 mm ausgebildet ist.

5. Katzenmöbel (10), insbesondere nach einem der Ansprüche 1 bis 4, mit mindestens einem räumlichen Gebilde (16), das aus mindestens zwei Flächenelementen (24) zusammengesetzt ist, die an mindestens einem ihrer Flächenränder (26) miteinander verbunden sind, wobei das einzelne Flächenelement (24) an mindestens einem seiner Flächenränder (26) mit einem Befestigungsmittel (28) versehen ist, mittels dem eine Verbindung zum Befestigungsmittel (28) eines benachbarten Flächenelements (24) herzustellen ist, **dadurch gekennzeichnet, dass** das Befestigungsmittel (28) mittels eines Klebematerials (80) gebildet ist.

6. Katzenmöbel nach Anspruch 5,
**dadurch gekennzeichnet, dass** das Klebematerial (80) mit einem beidseitig klebenden Klebeband gebildet ist.

7. Katzenmöbel nach Anspruch 5 oder 6,
**dadurch gekennzeichnet, dass** ein Stützelement (14, 32) für das räumliche Gebildet (16) vorgesehen ist, wobei das Klebematerial (80) dazu angepasst ist, an eine Stützfläche des Stützelements (14, 32) aufgeklebt zu werden.

8. Katzenmöbel nach einem der Ansprüche 5 bis 7,
**dadurch gekennzeichnet, dass** das Stützelement (14, 32) dazu angepasst ist, an eine Befestigungsfläche außerhalb des Katzenmöbels (10), wie eine Gebäudewand, aufgeklebt zu werden.

9. Verfahren zum Herstellen eines Katzenmöbels (10), insbesondere nach einem der Ansprüche 1 bis 8, mit mindestens einem Flächenelement (24) mit den Schritten:
- Bereitstellen von mindestens einem Kunststoff-Rohmaterial,
- Herstellen mehrerer, verschiedener Lagen Nadel-Filz aus dem mindestens einen Kunststoff-Rohmaterial sowie Verfilzen der Lagen Nadel-Filz zu einer Nadel-Filz-Schicht und
- Verpressen der Nadel-Filz-Schicht unter Eintrag von Wärme.

10. Verfahren nach Anspruch 9,
**dadurch gekennzeichnet, dass** der Eintrag von Wärme bei einer Temperatur von zwischen 180° C und 250° C, insbesondere zwischen 210° C und 220° C erfolgt.
